# EUROPEAN PATENT APPLICATION

(11) **EP 4 120 149 A1**
(43) Date of publication of application: **18.01.2023**
(21) Application number: 21767073.6
(22) Date of filing: 04.02.2021
(51) Int. Cl.: G06N 20/00

(54) **LEARNING DATA GENERATION DEVICE, LEARNING DEVICE, CONTROL DEVICE, LEARNING DATA GENERATION METHOD, LEARNING METHOD, CONTROL METHOD, LEARNING DATA GENERATION PROGRAM, LEARNING PROGRAM, AND CONTROL PROGRAM**

(30) Priority: 13.03.2020 JP 2020044804
(71) Applicant: OMRON Corporation, Kyoto 600-8530 (JP)
(72) Inventor: ITO, Yoshiki, Kyoto-shi, Kyoto 600-8530 (JP); UEYAMA, Yuki, Kyoto-shi, Kyoto 600-8530 (JP); ABE, Yasuaki, Kyoto-shi, Kyoto 600-8530 (JP); INAMOTO, Shuji, Kyoto-shi, Kyoto 600-8530 (JP)
(74) Representative: SONN Patentanwälte OG
(86) International application number: PCT/JP2021/004140
(87) International publication number: WO 2021/181963

(57) **Abstract**

An acquiring section acquires a plurality of observed data that are observed data observed from an object of control and that express combinations of explanatory variables and objective variables. A teacher learning section, on the basis of the plurality of observed data acquired by the acquiring section, trains a model for outputting the objective variable from the explanatory variable, and generates a learned teacher model. A learning data generating section, by inputting a predetermined explanatory variable to the teacher model generated by the teacher learning section, acquires a predetermined objective variable with respect to the predetermined explanatory variable, and generates a combination of the predetermined explanatory variable and the predetermined objective variable as learning data for training a decision tree model.

## Description

### Technical Field

The technique of the disclosure relates to a learning data generating device, a learning device, a control device, a learning data generating method, a learning method, a control method, a learning data generating program, a learning program, and a control program.

### Background Art

There is conventionally known a plant controlling system that, by using start-up data of the plant, can realize identification of the plant and adjustment of control parameters (see, for example, Patent Document 1: Japanese Patent Application Laid-Open (JP-A) No. 2010-113638).

The system supporting tool disclosed in JP-A No. 2010-113638 estimates model parameters of the plant on the basis of the start-up data and by using an identification function. Then, by using a control parameter adjusting function, the system supporting tool computes control parameters relating to a model prediction control section and a PID control section by using model parameters that are the results of identification.

### SUMMARY OF INVENTION

### Technical Problem

By the way, in any control system, there are cases in which observed data that has been observed from an object of control is set as learning data, and a model that operates in the control system is trained. In a case in which a decision tree model, which is a model expressing a decision tree, is trained as an example of such a model, the more the number of learning data increases, the more the number of layers of the decision tree model increases, and the more the computation time and the memory capacity of the model increase.

However, there is the need to reduce the computation time at the equipment that are incorporated in the control system. With regard to this point, in a case of training a decision tree model by using a huge amount of observed data that has been observed from an object of control, the computation time of the decision tree model and the memory capacity of the model increase, and therefore, it is not preferable to use a huge amount of learning data.

Thus, it is often the case that a small number of observed data are selected as learning data from the huge amount of observed data. However, in this case, if the observed data that are selected are not suitable as learning data, the decision tree model at which learning has been carried out by using this learning data also is not suitable. Specifically, in a case in which noise is included in the observed data that have been selected as the learning data, the accuracy of the decision tree model learned by using this learning data is low. However, it is difficult to sort out the learning data, which do not lower the accuracy of the decision tree model, from the huge amount of observed data.

In the technique disclosed in aforementioned JP-A No. 2010-113638, start-up data of a plant is collected, and model parameters are estimated on the basis of this start-up data, but sorting of the start-up data is not considered. Therefore, in a case of reducing the computation time of the decision tree model and the memory capacity of the model by using the technique disclosed in aforementioned JP-A No. 2010-113638, there is the problem that the start-up data must be sorted manually, and it is difficult to easily reduce the amount of learning data.

The technique of the disclosure was made in view of the above-described point, and an object thereof is to facilitate a reduction in the amount of learning data.

### Solution to Problem

In order to achieve the above-described object, a learning data generating device relating to the technique of the disclosure is a learning data generating device comprising: an acquiring section acquiring a plurality of observed data that are observed data observed from an object of control and that express combinations of explanatory variables and objective variables; a teacher learning section that, on the basis of the plurality of observed data acquired by the acquiring section, trains a model for outputting the objective variable from the explanatory variable, and generates a learned teacher model; and a learning data generating section that, by inputting a predetermined explanatory variable to the teacher model generated by the teacher learning section, acquires a predetermined objective variable with respect to the predetermined explanatory variable, and generates a combination of the predetermined explanatory variable and the predetermined objective variable as learning data for training a decision tree model.

Further, the object of control can be a production device.

Further, a learning device relating to the technique of the disclosure is a learning device comprising: a learning data acquiring section that acquires the learning data generated by the above-described learning data generating device; and a learning section that trains the decision tree model on the basis of the learning data acquired by the learning data acquiring section.

Further, a control device relating to the technique of the disclosure is a control device comprising: an information acquiring section that acquires the explanatory variable from the object of control; and a control section that, by inputting the explanatory variable acquired by the information acquiring section to the decision tree model learned by the above-described learning device, acquires an objective variable corresponding to the explanatory variable, and carries out control corresponding to the objective variable on the object of control.

Further, a learning data generating method relating to the technique of the disclosure is a learning data generating method comprising: an acquiring section acquiring a plurality of observed data that are observed data observed from an object of control and that express combinations of explanatory variables and objective variables; on the basis of the plurality of observed data acquired by the acquiring section, a teacher learning section training a model for outputting the objective variable from the explanatory variable, and generating a learned teacher model; and a learning data generating section inputting a predetermined explanatory variable to the teacher model generated by the teacher learning section and thereby acquiring a predetermined objective variable with respect to the predetermined explanatory variable, and generating a combination of the predetermined explanatory variable and the predetermined objective variable as learning data for training a decision tree model.

Further, a learning method relating to the technique of the disclosure is learning method comprising: a learning data acquiring section acquiring the learning data generated by the above-described learning data generating method; and a learning section training the decision tree model on the basis of the learning data acquired by the learning data acquiring section.

Further, a control method relating to the technique of the disclosure is a control method comprising: an information acquiring section acquiring the explanatory variable from the object of control; and a control section inputting the explanatory variable acquired by the information acquiring section to the decision tree model learned by the above-described learning method and thereby acquiring an objective variable corresponding to the explanatory variable, and carrying out control corresponding to the objective variable on the object of control.

Further, a learning data generating program relating to the technique of the disclosure is a learning data generating program for causing a computer to function as: an acquiring section acquiring a plurality of observed data that are observed data observed from an object of control and that express combinations of explanatory variables and objective variables; a teacher learning section that, on the basis of the plurality of observed data acquired by the acquiring section, trains a model for outputting the objective variable from the explanatory variable, and generates a learned teacher model; and a learning data generating section that, by inputting a predetermined explanatory variable to the teacher model generated by the teacher learning section, acquires a predetermined objective variable with respect to the predetermined explanatory variable, and generates a combination of the predetermined explanatory variable and the predetermined objective variable as learning data for training a decision tree model.

Further, a learning program relating to the technique of the disclosure is a learning program for causing a computer to function as: a learning data acquiring section that acquires the learning data generated by the above-described learning data generating program; and a learning section that trains the decision tree model on the basis of the learning data acquired by the learning data acquiring section.

Further, a control program relating to the technique of the disclosure is a control program for causing a computer to function as: an information acquiring section that acquires the explanatory variable from the object of control; and a control section that, by inputting the explanatory variable acquired by the information acquiring section to the decision tree model learned by the above-described learning program, acquires an objective variable corresponding to the explanatory variable, and carries out control corresponding to the objective variable on the object of control.

### Advantageous Effects of Invention

In accordance with the learning data generating device, the learning device, the control device, and the methods and programs relating to the technique of the disclosure, reducing the amount of learning data can be made easy.

### BRIEF DESCRIPTION OF DRAWINGS

Fig. 1 is a block drawing illustrating functional structures of a control system relating to a present embodiment.
Fig. 2 is a block drawing illustrating hardware structures of a learning device relating to the present embodiment.
Fig. 3 is a block drawing illustrating hardware structures of a PLC relating to the present embodiment.
Fig. 4 is a drawing that schematically illustrates a decision tree model.
Fig. 5 is a drawing for explaining learning of the decision tree model.
Fig. 6 is a drawing for explaining a case of selecting several data from observed data.
Fig. 7 is a drawing for explaining generating of learning data.
Fig. 8 is a flowchart illustrating the flow of learning data generating processing in the present embodiment.
Fig. 9 is a flowchart illustrating the flow of learning processing in the present embodiment.
Fig. 10 is a flowchart illustrating the flow of control processing in the present embodiment.
Fig. 11 is a drawing for explaining a modified example of the present embodiment.
Fig. 12 is a drawing for explaining a modified example of the present embodiment.

### DESCRIPTION OF EMBODIMENTS

An example of an embodiment of the technique of the disclosure is described hereinafter with reference to the drawings. The present embodiment describes, as an example, a PLC (Programmable Logic Controller) in which is installed the control device relating to the technique of the disclosure. Note that, in the respective drawings, structural elements and portions are the same or equivalent are denoted by the same reference numerals. Further, the dimensions and ratios in the drawings are exaggerated for convenience of explanation, and there are cases in which they differ from the actual ratios.

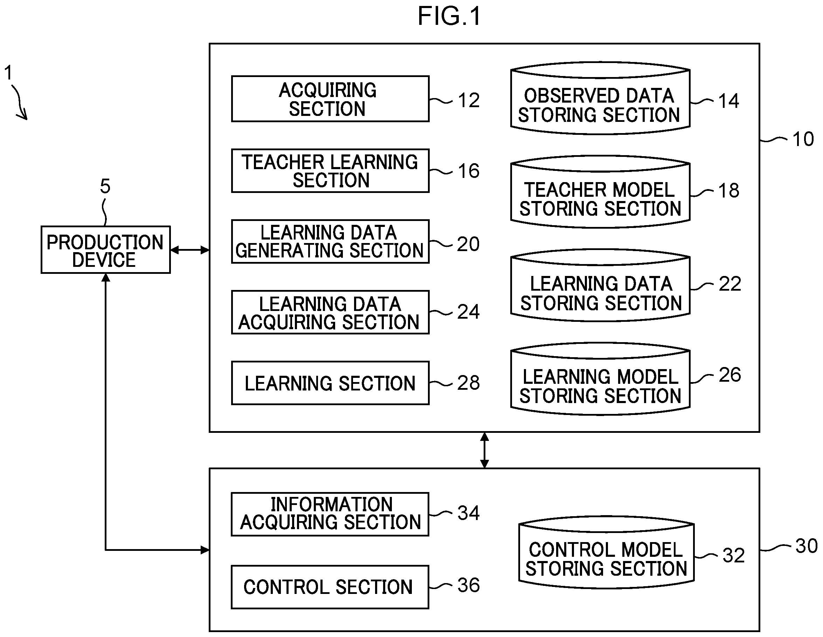

As illustrated in Fig. 1, a control system 1 relating to the present embodiment has a production device 5, a learning device 10 and a PLC 30. The PLC 30 relating to the present embodiment controls the operations of the production device 5, which is the object of control, by using a learned decision tree model that is generated by the learning device 10. The production device 5 is, for example, a conveying device, a press machine, or the like. There may be one of or a plurality of the production device 5 that is the object of control.

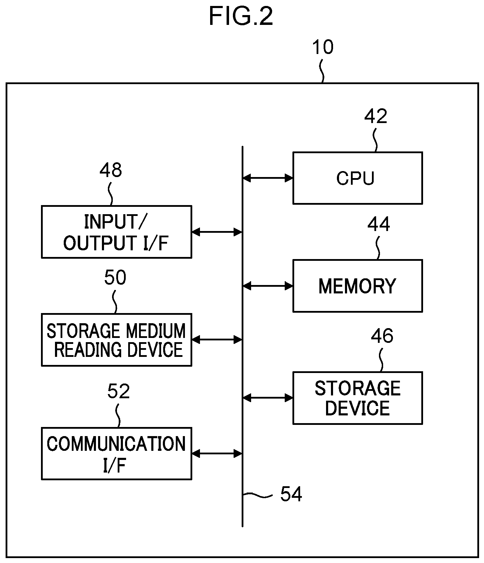

Fig. 2 is a block drawing illustrating hardware structures of the learning device 10 relating to the present embodiment. As illustrated in Fig. 2, the learning device 10 has a CPU (Central Processing Unit) 42, a memory 44, a storage device 46, an input/output I/F (Interface) 48, a storage medium reading device 50, and a communication I/F 52. These structures are connected so as to be able to communicate with one another via a bus 54.

A learning data generating program and a learning program, which are for executing respective processings that are described later, are stored in the storage device 46. The CPU 42 is a central computing processing unit, and executes various programs and controls the respective structures. Namely, the CPU 42 reads-out programs from the storage device 46, and executes the programs by using the memory 44 as a workspace. The CPU 42 carries out control of the above-described respective structures, and various computing processings, in accordance with the programs stored in the storage device 46.

The memory 44 is structured from a RAM (Random Access Memory), and, as a workspace, temporarily stores programs and data. The storage device 46 is structured by a ROM (Read Only Memory) and an HDD (Hard Disk Drive), an SSD (Solid State Drive) or the like, and stores various programs, including the operating system, and various data.

The input/output I/F 48 is an interface that carries out input of data from the production device 5 and output of data to the production device 5. Further, input devices for carrying out various types of input such as a keyboard, a mouse and the like for example, and an output devices for outputting various types of information, such as a display and a printer and the like for example, may be connected to the input/output I/F 48. By employing a touch panel display as the output device, the output device may be made to function as the input device.

The storage medium reading device 50 carries out reading of data that are stored on various storage media such as a CD (Compact Disc)-ROM, a DVD (Digital Versatile Disc)-ROM, a flexible disc, a USB (Universal Serial Bus) memory or the like, and writing of data to storage media, and the like.

The communication I/F 52 is an interface for communicating with other equipment, and standards such as, for example, Ethernet^{®}, FDDI, Wi-Fi^{®}, or the like are used thereat.

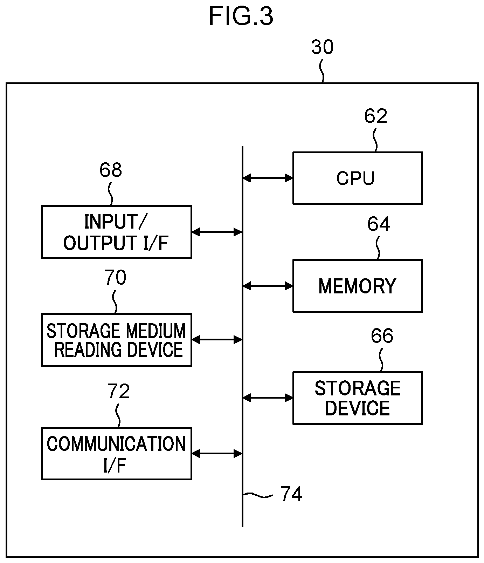

Fig. 3 is a block drawing illustrating hardware structures of the PLC 30 relating to the present embodiment. As illustrated in Fig. 3, the PLC 30 has a CPU 62, a memory 64, a storage device 66, an input/output I/F 68, a storage medium reading device 70, and a communication I/F 72. These structures are connected so as to be able to communicate with one another via a bus 74.

A control program for executing the control processing that is described later is stored in the storage device 66. The CPU 62 is a central computing processing unit, and executes various programs and controls the respective structures. Namely, the CPU 62 reads-out programs from the storage device 66, and executes the programs by using the memory 64 as a workspace. The CPU 62 carries out control of the above-described respective structures, and various computing processings, in accordance with the programs stored in the storage device 66.

The memory 64 is structured from a RAM, and, as a workspace, temporarily stores programs and data. The storage device 66 is structured by a ROM and an HDD, an SSD or the like, and stores various programs, including the operating system, and various data.

The input/output I/F 68 is an interface that carries out input of data from the production device 5 and output of data to the production device 5. Further, input devices for carrying out various types of input such as a keyboard, a mouse and the like for example, and an output devices for outputting various types of information, such as a display and a printer and the like for example, may be connected to the input/output I/F 68. By employing a touch panel display as the output device, the output device may be made to function as the input device.

The storage medium reading device 70 carries out reading of data that is stored on various storage media such as a CD-ROM, a DVD-ROM, a flexible disc, a USB memory or the like, and writing of data to storage media, and the like.

The communication I/F 72 is an interface for communicating with other equipment, and standards such as, for example, Ethernet^{®}, FDDI, Wi-Fi^{®}, or the like are used thereat.

The functional structures of the learning device 10 are described next. As illustrated in Fig. 1, the learning device 10 functionally includes an acquiring section 12, a teacher learning section 16, a learning data generating section 20, a learning data acquiring section 24, and a learning section 28. Further, an observed data storing section 14, a teacher model storing section 18, a learning data storing section 22, and a learning model storing section 26 are provided in a predetermined storage region of the learning device 10. These respective functional structures are realized by the CPU 42 reading out respective programs that are stored in the storage device 46, and expanding and executing the programs in the memory 44.

The acquiring section 12 acquires plural observed data, which have been observed, from the production device 5 that is the object of the control. Then, the acquiring section 12 stores the plural observed data that are acquired in the observed data storing section 14. The observed data of the present embodiment are data expressing combinations of explanatory variables and objective variables.

The explanatory variables of the observed data are information such as, for example, the number of revolutions of the motor within the production device 5, sensor values detected by various sensors provided at the production device 5, results of processing obtained by carrying out judging processing or the like on the basis of these values, and the like. The objective variables of the observed data are predicted values of states and the like of the production device 5 that are inferred with respect to the inputted explanatory variables.

On the basis of the explanatory variables among the observed data, the decision tree model of the present embodiment that will be described later outputs objective variables that are predicted values needed for control of the production device 5. Namely, on the basis of the explanatory variables, the decision tree model of the present embodiment infers predicted values that are needed to control the production device 5. Further, the PLC 30 that is described later generates control signals that correspond to the objective variables estimated from the decision tree model. The PLC 30 carries out control, which corresponds to the control signals generated from the objective variables, on the production device 5.

The plural observed data that are acquired by the acquiring section 12 are stored in the observed data storing section 14.

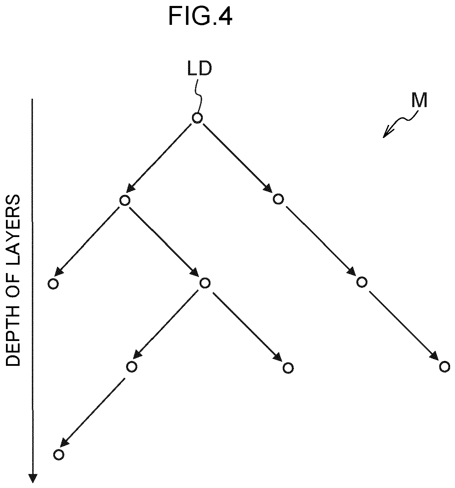

Here, a schematic drawing of the decision tree model of the present embodiment is illustrated in Fig. 4. As illustrated in Fig. 4, when learning is carried out in accordance with learning data LD, a learned decision tree model M is generated. When a given explanatory variable is inputted to this learned decision tree model M, an objective variable corresponding to the explanatory variable is obtatined. In the learned decision tree model M illustrated in Fig. 4, the number of learning data LD is 10, and this is a model with a deep depth of layers. Because the learned decision tree model M illustrated in Fig. 4 has a large number of learning data, the computation time is longer than, for example, a decision tree model in which the number of learning data is 3.

There are cases in which the computation time of the incorporated equipment, such as the PLC 30 of the present embodiment, is limited. Moreover, the incorporated equipment also have constraints relating to memory size. Therefore, the upper limit of the number of learning data that can be used in learning is determined in advance, and it is preferable to generate a decision tree model with as small a number of learning data as possible. Thus, in the present embodiment, the decision tree model is generated by using a small number of learning data. Specifics are described hereinafter.

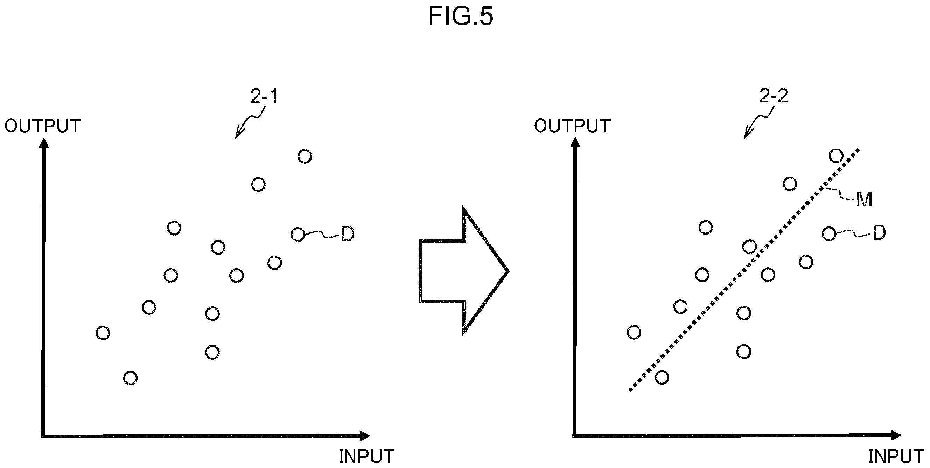

A drawing for explaining learning of the decision tree model is illustrated in Fig. 5. The input on the horizontal axes of the graphs illustrated in Fig. 5 shows the explanatory variables. Further, the output on the vertical axes of the graphs illustrated in Fig. 5 shows the objective variables. As illustrated in 2-1 of Fig. 5, in a case in which observed data D that are pairs of an explanatory variable and an objective variable exists, the decision tree model M, which is a regression tree such as in 2-2, is generated on the basis of these observed data D by an existing learning algorithm.

However, with the decision tree model M such as illustrated in Fig. 5, there is large number of observed data that are used at the time of generating the model, and therefore, the computation time is long. Thus, it has been thought to, for example, select several data from among the plural observed data, and train the decision tree model by using the selected observed data as the learning data.

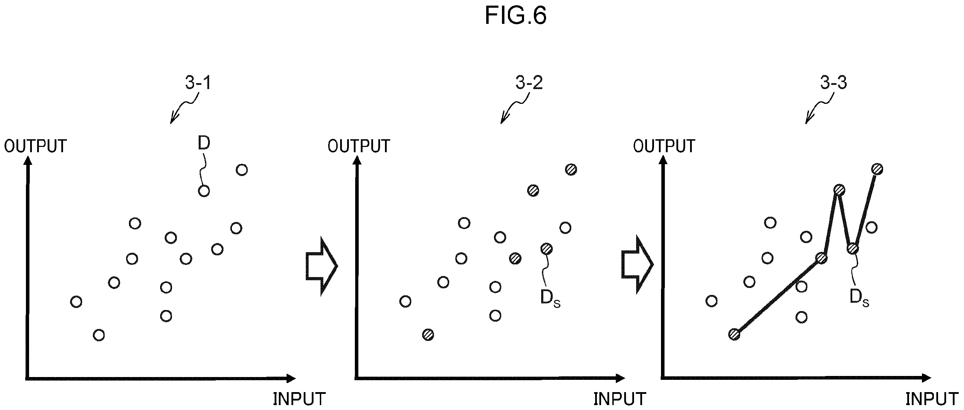

A drawing for explaining a case of selecting several data from among observed data is illustrated in Fig. 6. As illustrated in 3-1 of Fig. 6, a case is considered in which plural observed data D are obtained. In this case, it is assumed that, as illustrated in 3-2 of Fig. 6, five data Ds for example are selected manually from the plural observed data D. However, as illustrated in 3-3 of Fig. 6, in a case in which noise is included in these data Ds, the accuracy of decision tree model M' that is learned on the basis of the data Ds is low, and the model is not an appropriate model.

Thus, in the present embodiment, a teacher model that expresses a teacher decision tree model is generated once by using plural observed data, and learning data for training another decision tree model is generated by using this teacher model.

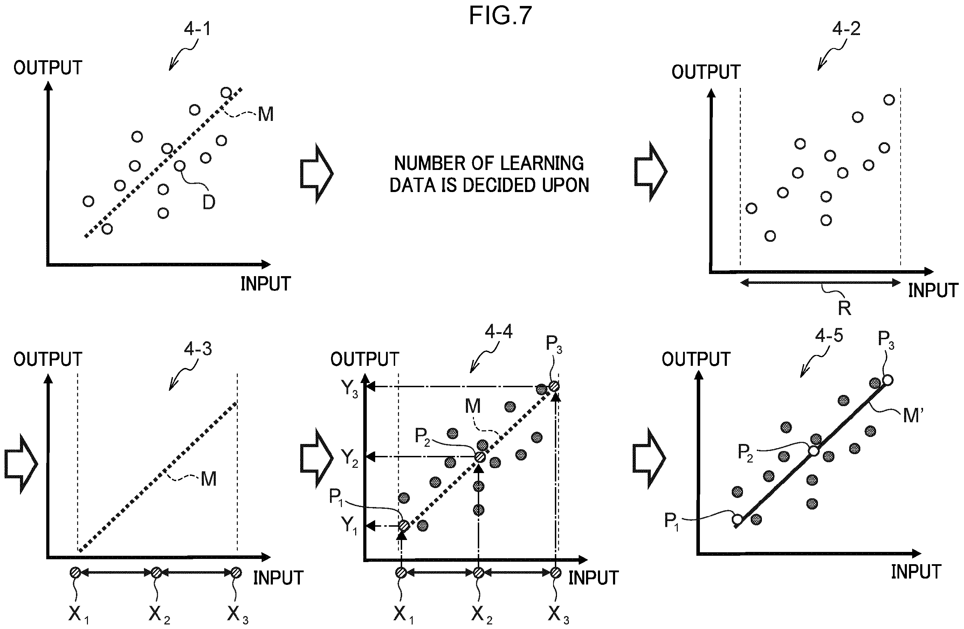

A drawing for explaining the generating of learning data in the present embodiment is illustrated in Fig. 7. As illustrated in 4-1 of Fig. 7, the teacher model M is generated on the basis of the plural observed data D by using an existing learning algorithm. Next, the number of learning data is decided upon. For example, in the example of Fig. 7, it is decided that three learning data are to be generated.

Then, in 4-2 of Fig. 7, range R of the explanatory variables at the time of generating the learning data is set. Specifically, as illustrated in 4-2 of Fig. 7, the upper limit of the explanatory variables and the lower limit of the explanatory variables among the plural observed data D are set, and this range is set as R.

Next, in 4-3 of Fig. 7, three explanatory variables X₁, X₂, X₃ that are to be inputted to the teacher model M are set. These three explanatory variables X₁, X₂, X₃ are explanatory variables that exist within the range R that has been set as the upper limit of the explanatory variable and the lower limit of the explanatory variables. Note that, in the example of Fig. 7, the three explanatory variables X₁, X₂, X₃ are set at a uniform interval.

Next, in 4-4 of Fig. 7, the three explanatory variables X₁, X₂, X₃ are inputted to the teacher model M, and objective variables Y₁, Y₂, Y₃ are outputted from the teacher model M. These three data P₁, P₂, P₃ are set as learning data.

Then, as illustrated in 4-5 of Fig. 7, another decision tree model M' that is different than the teacher model M is generated on the basis of the learning data P₁, P₂, P₃. Because this decision tree model M' is a model that has been generated from the three learning data P₁, P₂, P₃, the decision tree model M' is a model of a short computation time. Moreover, at the decision tree model M', because learning has been carried out on the basis of the learning data generated from the teacher model M, the decision tree model M' is an accurate model.

Therefore, on the basis of the plural observed data that have been acquired by the acquiring section 12, the teacher learning section 16 trains a model for outputting objective variables from explanatory variables, and generates a learned teacher model. Note that the present embodiment describes an example of a case in which a decision tree model is used as the teacher model. The decision tree model may be either of a classification tree or a regression tree.

The learned teacher model that has been generated by the teacher learning section 16 is stored in the teacher model storing section 18.

Due to the learning data generating section 20 inputting a predetermined explanatory variable X to the learned teacher model that has been generated by the teacher learning section 16, the learning data generating section 20 acquires a predetermined objective variable Y with respect to the predetermined explanatory variable X. Then, the learning data generating section 20 generates the combination of the predetermined explanatory variable X and the predetermined objective variable Y as learning data for training another decision tree model.

Specifically, first, as illustrated in above-described Fig. 7, the learning data generating section 20 sets the upper limit of the explanatory variables and the lower limit of the explanatory variables among the plural observed data. Next, as illustrated in above-described Fig. 7, the learning data generating section 20 sets, as predetermined explanatory variables, explanatory variables that exist within the range between the upper limit of the explanatory variables and the lower limit of the explanatory variables.

Then, as illustrated in above-described Fig. 7, the learning data generating section 20 inputs the predetermined explanatory variables that have been set to the teacher model that is stored in the teacher model storing section 18. Due thereto, predetermined objective variables that correspond to the predetermined explanatory variables are outputted from the teacher model. The learning data generating section 20 stores the combinations of the predetermined explanatory variables X and predetermined objective variables Y in the learning data storing section 22 as learning data for training another decision tree model that is different than the teacher model.

Plural learning data that have been generated by the learning data generating section 20 are stored in the learning data storing section 22.

At the time of training the another decision tree model that is different than the teacher model, the learning data acquiring section 24 acquires learning data that are stored in the learning data storing section 22.

On the basis of the learning data acquired by the learning data acquiring section 24, the learning section 28 trains the another decision tree model that is different than the teacher model. Note that, because the number of learning data is smaller than the number of observed data, the depth of the layers of the another decision tree model that is the object of learning is smaller than the depth of the layers of the teacher model.

The learned decision tree model that has been learned by the learning section 28 is stored in the learning model storing section 26.

Functional structures of the PLC 10 relating to the present embodiment are described next.

As illustrated in above-described Fig. 1, the PLC 10 includes an information acquiring section 34 and a control section 36 as the functional structures thereof. Further, a control model storing section 32 is provided in a predetermined region of the PLC 10. The respective functional structures are realized by the CPU 62 reading-out a control program stored in the storage device 66, and expanding and executing the control program in the memory 64.

The learned decision tree model that has been learned by the learning device 10 is stored in the control model storing section 32.

The information acquiring section 34 acquires an explanatory variable outputted from the production device 5.

By inputting the explanatory variable acquired by the information acquiring section 34 to the learned decision tree model stored in the control model storing section 32, the control section 36 acquires the objective variable corresponding to that explanatory variable. Then, the control section 36 carries out control corresponding to the acquired objective variable on the production device 5.

Specifically, on the basis of the objective variable outputted from the learned decision tree model, the control section 36 generates and outputs control signals for controlling the production device 5. For example, in accordance with an objective variable that expresses a state of the production device 5 and that has been predicted by the decision tree model, the control section 36 generates control signals for adjusting the angles of rollers and changing the number of revolutions of the motor. Then, the control section 36 carries out control corresponding to the control signals on the production device 5.

Operation of the control system 1 relating to the present embodiment is described next.

First, the processing of generating the learning data, which is executed at the learning device 10, is described. At the time when the production device 5 is driven, the acquiring section 12 of the learning device 10 successively acquires observed data that is outputted from the production device 5, and stores the observed data in the observed data storing section 14.

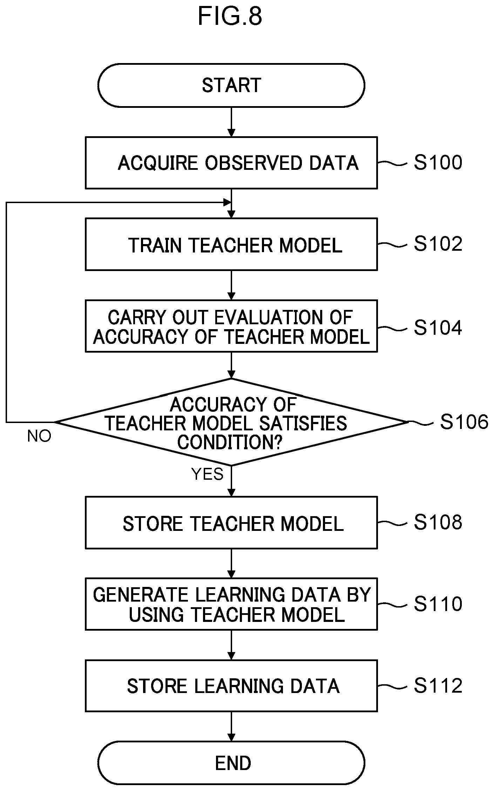

Then, when the learning device 10 receives a signal instructing the generating of learning data, the CPU 42 of the learning device 10 reads-out the learning data generating program from the storage device 46, and expands and executes the program in the memory 44. Due thereto, the CPU 42 functions as the respective functional structures of the learning device 10, and the learning data generating processing illustrated in Fig. 8 is executed.

In step S100, the acquiring section 12 acquires the plural observed data that are stored in the observed data storing section 14.

In step S 102, on the basis of the plural observed data acquired in above-described step S100, the teacher learning section 16 trains a decision tree model for outputting an objective variable from an explanatory variable, and generates a learned teacher model.

In step S104, the teacher learning section 16 carries out evaluation of the accuracy of the learned teacher model generated in above-described step S102. For example, by using the plural observed data that were acquired in above-described step S100, the teacher learning section 16 computes the accuracy rate of the learned teacher model.

In step S 106, the teacher learning section 16 judges whether or not the results of the evaluation of the accuracy that were obtained in above-described step S 104 satisfy a predetermined condition. For example, if the accuracy rate obtained in above-described step S104 is greater than or equal to a predetermined threshold value, it is considered that the accuracy of the teacher model satisfies the predetermined condition, and the routine moves on to step S108. On the other hand, if the accuracy rate obtained in above-described step S104 is less than the predetermined threshold value, it is considered that the accuracy of the teacher model does not satisfy the predetermined condition, and the routine moves on to step S102 and repeats the learning.

In step S108, the teacher learning section 16 stores the learned teacher model, which was obtained in above-described step S102, in the teacher model storing section 18.

In step S110, due to the learning data generating section 20 inputting a predetermined explanatory variable X to the learned teacher model stored in the teacher model storing section 18 in above-described step S108, the learning data generating section 20 acquires a predetermined objective variable Y with respect to the predetermined explanatory variable X. Then, the learning data generating section 20 generates the combination of the predetermined explanatory variable X and the predetermined objective variable Y as learning data for training another decision tree model. Note that the learning data generating section 20 generates plural learning data.

In step S112, the learning data generating section 20 stores the plural learning data that were generated in above-described step S110 in the learning data storing section 22, and ends the learning data generating processing.

The learning processing executed at the learning device 10 is described next.

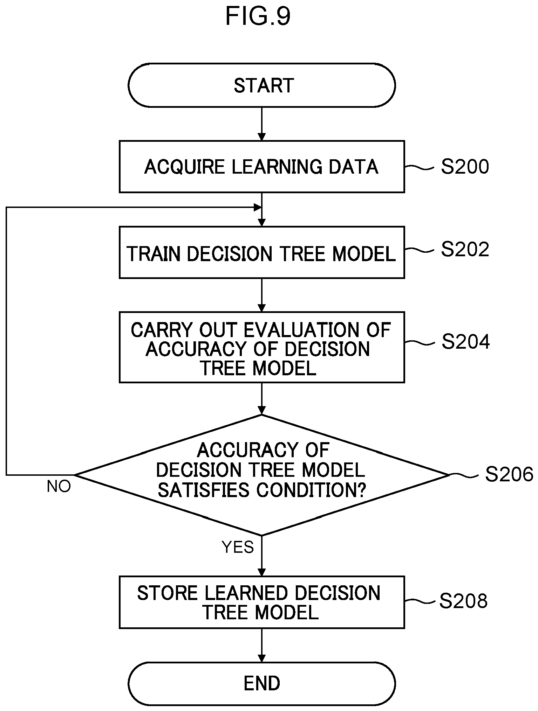

After the plural learning data are stored in the learning data storing section 22, when the learning device 10 receives a signal instructing the generating of a decision tree model, the CPU 42 of the learning device 10 reads-out the learning program from the storage device 46, and expands and executes the program in the memory 44. Due thereto, the CPU 42 functions as the respective functional structures of the learning device 10, and the learning processing illustrated in Fig. 9 is executed.

In step S200, the learning data acquiring section 24 acquires the plural learning data that are stored in the learning data storing section 22.

In step S202, on the basis of the learning data acquired in above-described step S200, the learning section 28 trains another decision tree model that is different than the above-described teacher model. Note that the depth of the layers of the another decision tree model that is the object of learning is smaller than the depth of the layers of the above-described teacher model.

In step S204, the learning section 28 carries out evaluating of the accuracy of the learned decision tree model that was generated in above-described step S202. For example, by using plural observed data that are stored in the observed data storing section 14, the teacher learning section 16 computes the accuracy rate of the learned decision tree model.

In step S206, the learning section 28 judges whether or not the results of the evaluation of the accuracy that were obtained in above-described step S204 satisfy a predetermined condition. For example, if the accuracy rate obtained in above-described step S204 is greater than or equal to a predetermined threshold value, it is considered that the accuracy of the decision tree model satisfies the predetermined condition, and the routine moves on to step S208. On the other hand, if the accuracy rate obtained in above-described step S204 is less than the predetermined threshold value, it is considered that the accuracy of the decision tree model does not satisfy the predetermined condition, and the routine moves on to step S202 and repeats the learning.

In step S208, the learning section 28 stores the learned decision tree model that was generated in above-described step S202 in the learning model storing section 26, and ends the learning processing.

The control processing executed at the PLC 30 is described next.

After the learned decision tree model is stored in the learning model storing section 26, that learned decision tree model is inputted to the PLC 30. The PLC 30 stores the learned decision tree model in the control model storing section 32.

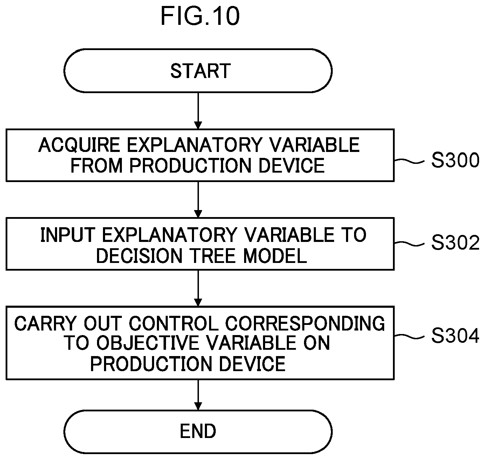

Then, when the PLC 30 receives a signal instructing the start of control of the production device 5, the CPU 62 of the PLC 30 reads-out the control program from the storage device 66, and expands and executes the program in the memory 64. Due thereto, the CPU 62 functions as the respective functional structures of the PLC 30, and the control processing illustrated in Fig. 10 is executed.

In step S300, the information acquiring section 34 acquires an explanatory variable, such as the number of revolutions of the motor or the like, that is outputted from the production device 5.

In step S302, due to the control section 36 inputting the explanatory variable acquired in above-described step S300 to the learned decision tree model that is stored in the control model storing section 32, the control section 36 acquires the objective variable corresponding to that explanatory variable.

In step S304, the control section 36 carries out control corresponding to the acquired objective variable on the production device 5. Specifically, on the basis of the objective variable outputted from the learned decision tree model, the control section 36 generates and outputs control signals for controlling the production device 5. Control processing using the decision tree model is thereby executed.

As described above, the learning device of the control system relating to the present embodiment acquires plural observed data that are observed data observed from an object of control and that express combinations of explanatory variables and objective variables. Then, on the basis of the plural observed data that have been acquired, the learning device trains a decision tree model for outputting objective variables from explanatory variables, and generates a learned teacher model. Then, by inputting predetermined explanatory variables to the teacher model, the learning device acquires predetermined objective variables with respect to the predetermined explanatory variables, and generates combinations of the predetermined explanatory variables and the predetermined objective variables as learning data for training a decision tree model. Due thereto, the amount of learning data can easily be reduced. Specifically, although there has conventionally been the need to select learning data from observed data by taking into consideration the quality and characteristics of the data used in learning, that labor is no longer necessary.

Further, learning data in which noise is reduced can be obtained. Specifically, learning data of good quality and on which the effects of noise are small are generated from the teacher model.

Further, the learning device of the present embodiment sets an upper limit of the explanatory variables and a lower limit of the explanatory variables, among the plural observed data. Then, the learning device sets explanatory variables, which exist within the range between the upper limit of the explanatory variables and the lower limit of the explanatory variables, as the predetermined explanatory variables, and inputs the predetermined explanatory variables that are set to the teacher model, and generates learning data. Due thereto, appropriate learning data can be generated within the range in which the observed data are obtained. With regard to this point, if the learning data are generated within a range in which the observed data is not obtained, and the decision tree model is trained on the basis of this learning data, this is not preferable from the standpoint of ensuring the operation of the PLC. Therefore, in accordance with the present embodiment, by generating learning data within the range in which the observed data are obtained, learning data that are appropriate also from the standpoint of ensuring operation of the PLC can be obtained.

Further, the learning device of the present embodiment trains another decision tree model on the basis of the learning data obtained from the teacher model. Due thereto, because the decision tree model is generated from learning data in which noise is reduced, a decision tree model of good accuracy can be obtained. Moreover, because the selecting of data that was carried out conventionally is unnecessary, the decision tree model can be generated easily.

Further, it is easy to apply the decision tree model at the time when the incorporated equipment are changed. Further, because learning data can be generated at any time from a teacher model that has been generated once, arbitrary changes to the size of the decision tree model are possible.

Further, the PLC of the present embodiment controls the object of control, which is a production device or the like, by using the decision tree model generated by the learning device. Therefore, accurate control is executed. Further, the object of control such as a production device or the like can be controlled by using the decision tree model that has a small amount of computation.

Note that, although the above-described embodiment describes an example in which the control device of the technique of the disclosure is installed in a PLC, the present disclosure is not limited to this. For example, the technique of the disclosure can also be applied to functions of autonomous driving or drive assist of a vehicle. In this case, data such as the amount of depression of the accelerator pedal or the brake pedal, the steering angle of the steering, the velocity, the acceleration or the like is acquired from the vehicle as an explanatory variable, and the explanatory variable is used as the input, and a predicted value that infers the state of the vehicle is outputted as the objective variable from the decision tree model. Then, it suffices to output control signals that are based on the objective variable to the vehicle.

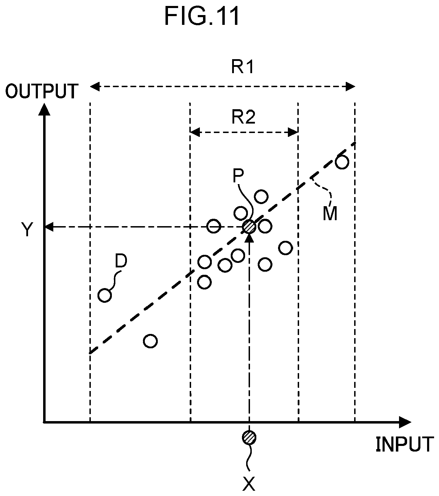

Further, the above embodiment describes, as an example, a case in which the learning data is generated within the range R between the upper limit of the explanatory variables and the lower limit of the explanatory variables, as illustrated in 4-3 of Fig. 7. However, the present disclosure is not limited to this. For example, as illustrated in Fig. 11, an explanatory variable, which is explanatory variable that exists within range R1 between the upper limit of the explanatory variables and the lower limit of the explanatory variables and that exists within range R2 in which the concentration of the observed data is greater than or equal to a threshold value, may be set as the predetermined explanatory variable X. In this case, because the number of observed data that exist within the range R2 is a predetermined density or more, learning data that approximate the observed data are obtained when the learning data are generated within this range, and this is more preferable. In this case, as illustrated in Fig. 11, the predetermined explanatory variable X that is set is inputted to the teacher model M, and the learning data P, which is the combination of the explanatory variable X and the objective variable Y, is generated.

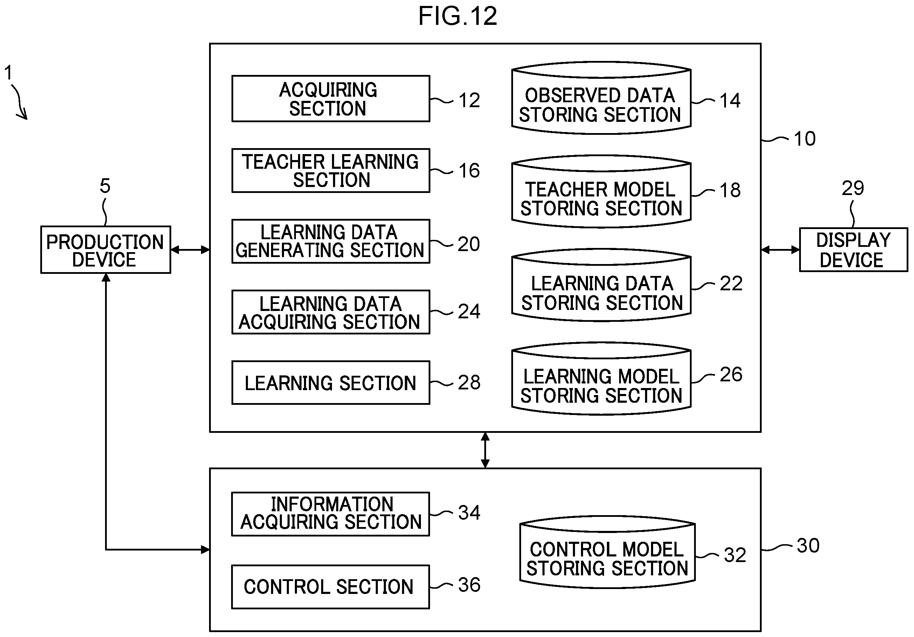

Further, although the above embodiment describes an example in which the learning processing is ended in a case in which the accuracy of the teacher model and the accuracy of the decision tree model are predetermined levels or higher, the present disclosure is not limited to this. For example, as illustrated in Fig. 12, the control system 1 may further have a display device 29, and a user may confirm the results of learning that are displayed on the display device 29. In this case, the user may confirm the accuracy of the teacher model and the accuracy of the decision tree model that are displayed on the display device 29, and may decide whether or not the learning may be ended.

Although the above embodiment describes, as an example, a case in which a decision tree model is used as the teacher model, the present disclosure is not limited to this. For example, a model of a type that is different than a decision tree model may be used as the teacher model.

Further, any of various types of processors other than a CPU may execute the respective processings that are executed due to the CPU reading software (programs) in the above-described embodiment. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the respective processings may be executed by one of these various types of processors, or may be executed by a combination of two or more of the same type or different types of processors (e.g., plural FPGAs, or a combination of a CPU and an FPGA, or the like). Further, the hardware structures of these various types of processors are, more specifically, electrical circuits that combine circuit elements such as semiconductor elements and the like.

Further, although the above embodiment describes, as an example, a case of being structured by the learning device 10 and the PLC 30, the present disclosure is not limited to this. For example, the learning device 10 and the PLC 30 may be structured as a single device. Further, the learning data generating processing of the learning device 10 may be structured as a learning data generating device, and the learning processing of the learning device 10 may be structured as a learning device.

Although the above embodiment describes an aspect in which the respective programs are stored in advance (e.g., are installed) in a storage device, the present disclosure is not limited to this. The programs may be provided in a form of being stored in a storage medium such as a CD-ROM, a DVD-ROM, a flexible disc, a USB memory, or the like. Further, the programs may be in a form that is downloaded from an external device over a network.

The disclosure of Japanese Patent Application No. 2020-044804 filed on March 13, 2020 is, in its entirety, incorporated by reference into the present specification. All publications, patent applications, and technical standards mentioned in the present specification are incorporated by reference into the present specification to the same extent as if such individual publication, patent application, or technical standard was specifically and individually indicated to be incorporated by reference.

## Claims

1. A learning data generating device comprising:
an acquiring section acquiring a plurality of observed data that are observed data observed from an object of control and that express combinations of explanatory variables and objective variables;
a teacher learning section that, on the basis of the plurality of observed data acquired by the acquiring section, trains a model for outputting the objective variable from the explanatory variable, and generates a learned teacher model; and
a learning data generating section that, by inputting a predetermined explanatory variable to the teacher model generated by the teacher learning section, acquires a predetermined objective variable with respect to the predetermined explanatory variable, and generates a combination of the predetermined explanatory variable and the predetermined objective variable as learning data for training a decision tree model.

2. The learning data generating device of Claim 1, wherein the object of control is a production device.

3. A learning device comprising:
a learning data acquiring section that acquires the learning data generated by the learning data generating device of Claim 1 or Claim 2; and
a learning section that trains the decision tree model on the basis of the learning data acquired by the learning data acquiring section.

4. A control device comprising:
an information acquiring section that acquires the explanatory variable from the object of control; and
a control section that, by inputting the explanatory variable acquired by the information acquiring section to the decision tree model learned by the learning device of Claim 3, acquires an objective variable corresponding to the explanatory variable, and carries out control corresponding to the objective variable on the object of control.

5. A learning data generating method comprising:
an acquiring section acquiring a plurality of observed data that are observed data observed from an object of control and that express combinations of explanatory variables and objective variables;
on the basis of the plurality of observed data acquired by the acquiring section, a teacher learning section training a model for outputting the objective variable from the explanatory variable, and generating a learned teacher model; and
a learning data generating section inputting a predetermined explanatory variable to the teacher model generated by the teacher learning section and thereby acquiring a predetermined objective variable with respect to the predetermined explanatory variable, and generating a combination of the predetermined explanatory variable and the predetermined objective variable as learning data for training a decision tree model.

6. A learning method comprising:
a learning data acquiring section acquiring the learning data generated by the learning data generating method of Claim 5; and
a learning section training the decision tree model on the basis of the learning data acquired by the learning data acquiring section.

7. A control method comprising:
an information acquiring section acquiring the explanatory variable from the object of control; and
a control section inputting the explanatory variable acquired by the information acquiring section to the decision tree model learned by the learning method of Claim 6 and thereby acquiring an objective variable corresponding to the explanatory variable, and carrying out control corresponding to the objective variable on the object of control.

8. A learning data generating program for causing a computer to function as:
an acquiring section acquiring a plurality of observed data that are observed data observed from an object of control and that express combinations of explanatory variables and objective variables;
a teacher learning section that, on the basis of the plurality of observed data acquired by the acquiring section, trains a model for outputting the objective variable from the explanatory variable, and generates a learned teacher model; and
a learning data generating section that, by inputting a predetermined explanatory variable to the teacher model generated by the teacher learning section, acquires a predetermined objective variable with respect to the predetermined explanatory variable, and generates a combination of the predetermined explanatory variable and the predetermined objective variable as learning data for training a decision tree model.

9. A learning program for causing a computer to function as
a learning data acquiring section that acquires the learning data generated by the learning data generating program of Claim 8; and
a learning section that trains the decision tree model on the basis of the learning data acquired by the learning data acquiring section.

10. A control program for causing a computer to function as:
an information acquiring section that acquires the explanatory variable from the object of control; and
a control section that, by inputting the explanatory variable acquired by the information acquiring section to the decision tree model learned by the learning program of Claim 9, acquires an objective variable corresponding to the explanatory variable, and carries out control corresponding to the objective variable on the object of control.
